# FASCICULE DE BREVET EUROPEEN

(11) **EP 3 944 985 B1**
(45) Date de publication et mention de la délivrance du brevet: **30.10.2024**
(21) Numéro de dépôt: 21188730.2
(22) Date de dépôt: 30.07.2021
(51) Int. Cl.: B60N 2/36, B60N 2/68

(54) **SIEGE DE VEHICULE**
FAHRZEUGSITZ
VEHICLE SEAT

(30) Priorité: 31.07.2020 FR 2008142
(43) Date de publication de la demande: 02.02.2022
(73) Titulaire: FAURECIA Sièges d'Automobile, 92000 Nanterre (FR)
(72) Inventeur: KLITTING, Rémi, 91150 BRIÈRES-LES-SCELLÉS (FR); LIEGEOIS, Emmanuel, 91150 BRIÈRES-LES-SCELLÉS (FR); PINTO, Frederic, 91150 BRIÈRES-LES-SCELLÉS (FR)
(74) Mandataire: Plasseraud IP

(56) Documents cités:
- WO-A1-2010/009321
- DE-A1- 102012 012 358
- FR-A1- 3 027 566

## Description

L'invention concerne un siège de véhicule, configuré de sorte à accueillir au moins deux utilisateurs, et notamment un siège de véhicule automobile, ainsi qu'un procédé de fabrication d'un tel siège, et encore un véhicule équipé d'un tel siège.

### Domaine technique

L'invention relève du domaine des sièges de véhicule configurés de sorte à accueillir au moins deux utilisateurs, appartenant par exemple à une banquette de véhicule, laquelle comprend généralement un ou plusieurs sièges, et est prévue pour accueillir plusieurs utilisateurs, assis côte à côte.

### Technique antérieure

De façon bien connue, un véhicule comprend généralement au moins un siège destiné à accueillir un conducteur ou un passager du véhicule, ci-après désigné sous le terme « utilisateur ». Le siège peut être destiné à accueillir une seule personne ou plusieurs personnes assises côte à côte, et peut être disposé à l'avant ou à l'arrière du véhicule. Le siège peut aussi faire partie d'une banquette susceptible d'accueillir plusieurs personnes côte à côte.

Ainsi, au sens de l'invention, le terme «siège» selon l'invention désigne aussi bien un siège avant du véhicule qu'un siège arrière du véhicule. De même, l'invention peut être mise en oeuvre pour des sièges destinés à tout type de véhicule et notamment à des véhicules automobiles.

Un siège de véhicule comprend généralement un châssis d'assise, prévu pour être relié au plancher d'un véhicule. Un siège de véhicule connu est divulgué notamment dans les documents WO 2010/009321 A1 et FR 3027566 A1.

Un siège de véhicule, lequel est prévu pour accueillir au moins deux passagers côte-à-côte, comprend également au moins un premier dossier, articulé de manière pivotante selon un axe transversal du siège au châssis d'assise, ainsi qu'un deuxième dossier, également articulé pivotant au châssis d'assise selon ledit axe transversal.

De façon connue, il peut être prévu une articulation commune au châssis d'assise pour le premier dossier et le deuxième dossier, au niveau d'une zone intermédiaire du châssis d'assise, selon la direction transversale du siège, comprenant un axe de pivotement commun reçu simultanément dans un logement correspondant, ménagé dans chacun du premier et du deuxième dossier, et de sorte à permettre l'articulation du premier dossier et du deuxième dossier par rapport au châssis d'assise.

Un tel axe de pivotement commun est fixé au châssis d'assise, de sorte à demeurer immobile par rapport à celui-ci.

Généralement, l'axe de pivotement comprend une portion centrale, une première portion latérale et une deuxième portion latérale, les deux portions latérales étant positionnées de part et d'autre de la portion centrale selon l'axe de l'axe de pivotement.

Par ailleurs, le premier dossier comprend généralement une première paroi dans laquelle est ménagé un premier logement recevant intérieurement la première portion latérale de l'axe de pivotement, en autorisant la rotation de l'axe de pivotement par rapport audit logement, autour de l'axe de l'axe de pivotement.

De la même manière, le deuxième dossier comprend généralement une deuxième paroi dans laquelle est ménagé un deuxième logement recevant intérieurement la deuxième paroi latérale de l'axe de pivotement, en autorisant la rotation de l'axe de pivotement par rapport audit logement, autour de l'axe de l'axe de pivotement.

Il peut être prévu sur la première portion latérale de l'axe de pivotement une nervure en saillie selon une direction radiale de l'axe de pivotement et s'étendant à l'opposé de l'axe de l'axe de pivotement.

Également, le premier logement peut présenter une forme sensiblement de trou de serrure, complémentaire de la section radiale de la première portion latérale de l'axe de pivotement et de la nervure, avec une portion circulaire et une portion sensiblement rectangulaire communicantes entre elles, la portion sensiblement rectangulaire étant positionnée au-dessus de la portion circulaire du premier logement, selon la direction verticale du siège, lorsque le premier dossier se trouve dans une position relevée, orienté sensiblement selon la direction verticale du siège.

Afin d'empêcher la coulissement du premier dossier par rapport à l'axe de pivotement le long de l'axe de l'axe de pivotement, après le montage du premier dossier sur l'axe de pivotement, ledit premier logement et ladite première portion latérale de l'axe de pivotement peuvent être configurés de telle sorte que :
- dans une première position du premier dossier par rapport à l'axe de pivotement autour de l'axe de l'axe de pivotement, la première portion latérale et la nervure soient apte à coulisser au travers du premier logement selon l'axe de l'axe de pivotement, et
- dans au moins une deuxième position du premier dossier par rapport à l'axe de pivotement autour de l'axe de l'axe de pivotement, le coulissement de la première portion latérale et la nervure au travers du premier logement, selon l'axe de l'axe de pivotement, soit empêché, la nervure se trouvant, au moins partiellement, en vis-à-vis de la première paroi à proximité du premier logement, et en vis-à-vis du premier dossier dans le prolongement de celui-ci à l'avant selon la direction longitudinale du siège.

Généralement, la nervure est orientée, du bas vers le haut selon le sens horaire, avec un angle compris entre -20° et +20° par rapport à la direction verticale du siège autour de l'axe de l'axe de pivotement.

Selon les constations de l'inventeur, un tel positionnement de la nervure par rapport à la direction verticale du siège présente l'inconvénient majeur que lors d'un choc reçu par ledit siège, et notamment par le premier dossier, lorsque ledit premier dossier est orienté sensiblement selon la direction verticale du siège, par exemple en cas de projection d'un élément se trouvant à l'arrière du siège contre ledit premier dossier, comme par exemple un bagage se trouvant dans le coffre du véhicule recevant ledit siège, ladite nervure va venir buter contre ladite première paroi du premier dossier et venir endommager celle-ci et déformer le premier logement. Ainsi, la forme du premier logement n'est plus adaptée pour empêcher le coulissement de la première portion latérale et la nervure au travers du premier logement selon l'axe de l'axe de pivotement dans ladite ou dans chacune desdites deuxièmes positions. Le premier dossier risque alors de se désolidariser de l'axe de pivotement, ce qui représente un risque élevé pour la sécurité d'un utilisateur reçu sur ledit premier dossier du siège, lequel se trouve, en position normale d'utilisation, orienté sensiblement selon la direction verticale du siège.

### Problème technique

L'invention vient pallier ces inconvénients des sièges de véhicule de l'art antérieur, configurés de sorte à recevoir au moins deux utilisateurs, en proposant un siège de véhicule configuré de sorte à accueillir au moins deux utilisateurs, augmentant la résistance de la fixation entre le premier dossier et le châssis d'assise.

Un autre but de la présente invention est de proposer un tel siège de véhicule facilitant le montage du premier dossier sur le châssis d'assise, et réduisant le temps de montage.

Un autre but de la présente invention est de proposer un tel siège de véhicule de conception simple et de coût de revient réduit.

Il est proposé un siège de véhicule configuré de sorte à accueillir au moins deux utilisateurs, comprenant :
- un châssis d'assise, destiné à être relié au plancher d'un véhicule,
- un premier dossier articulé pivotant au châssis d'assise selon un axe transversal du siège,
- un deuxième dossier articulé pivotant au châssis d'assise selon l'axe transversal du siège.

Selon l'invention, le premier dossier et le deuxième dossier sont reliés au châssis d'assise par l'intermédiaire d'une articulation commune, positionnée dans une zone intermédiaire du châssis d'assise, selon la direction transversale du siège.

Selon l'invention, ladite articulation commune comporte :
- un axe de pivotement d'axe confondu avec l'axe transversal du siège, comprenant au moins une portion centrale, une première portion latérale et une deuxième portion latérale, les deux portions latérales étant positionnées de part et d'autre de la portion centrale selon l'axe de l'axe de pivotement,
- un premier logement ménagé sur le premier dossier et recevant intérieurement la première portion latérale de l'axe de pivotement, en autorisant la rotation du premier dossier par rapport à l'axe de pivotement autour de l'axe dudit axe de pivotement,
- un deuxième logement ménagé sur le deuxième dossier et recevant intérieurement la deuxième portion latérale de l'axe de pivotement, en autorisant la rotation du deuxième dossier par rapport à l'axe de pivotement autour de l'axe dudit axe de pivotement,
- un troisième logement ménagé sur le châssis d'assise, et recevant intérieurement la portion centrale de l'axe de pivotement, la portion centrale étant maintenue immobile dans le troisième logement et de sorte que l'axe de pivotement soit maintenu immobile par rapport au châssis d'assise.

Selon l'invention, a première portion latérale présente une nervure en saillie selon une direction radiale de l'axe de pivotement et s'étendant à l'opposé de l'axe de l'axe de pivotement.

Selon l'invention, le premier logement présente une forme sensiblement de trou de serrure, complémentaire de la section radiale de la première portion latérale de l'axe de pivotement et de la nervure, avec une portion circulaire de centre et une portion sensiblement rectangulaire communicantes entre elles, la portion sensiblement rectangulaire étant positionnée au-dessus de la portion circulaire du premier logement, selon la direction verticale du siège, lorsque le premier dossier se trouve dans une position relevée, orienté sensiblement selon la direction verticale du siège.

Selon l'invention, ledit premier logement et ladite première portion latérale de l'axe de pivotement sont configurés de telle sorte que :
- dans une première position du premier dossier, par rapport à l'axe de pivotement autour de l'axe de l'axe de pivotement, la première portion latérale et la nervure soient apte à coulisser au travers du premier logement selon l'axe de l'axe de pivotement, et
- dans au moins une deuxième position du premier dossier par rapport à l'axe de pivotement autour de l'axe de l'axe de pivotement, le coulissement de la première portion latérale et la nervure au travers du premier logement selon l'axe de l'axe de pivotement, soit empêché, la nervure se trouvant, au moins partiellement, en vis-à-vis de la première paroi à proximité du premier logement, selon la direction de l'axe de l'axe de pivotement.

Selon l'invention, la nervure est orientée, du bas vers le haut selon le sens horaire, selon un angle compris entre 30° et 60°, de préférence entre 35° et 55° par rapport à la direction verticale du siège autour de l'axe de l'axe de pivotement.

Selon des caractéristiques optionnelles de l'invention, prises seules ou en combinaison :
- la nervure présente une section radiale sensiblement rectangulaire symétrique par rapport à un axe passant par l'axe de l'axe de pivotement et la première portion latérale présente une section radiale sensiblement circulaire centrée sur l'axe de l'axe de pivotement, et la section radiale de la nervure est de forme sensiblement identique à la portion sensiblement rectangulaire du deuxième logement et la section radiale de la première portion latérale est de forme sensiblement identique à la portion circulaire du premier logement ;
- la nervure présente une face d'extrémité radiale positionnée à une distance de l'axe de l'axe de pivotement strictement supérieure au rayon de la portion circulaire du premier logement ;
- le rayon de la portion circulaire du premier logement est sensiblement égal, au jeu de coulissement près, au rayon de la section radiale de la première portion latérale de l'axe de pivotement ;
- la portion sensiblement rectangulaire du premier logement présente un axe de symétrie passant par le centre de la portion circulaire, et le premier dossier présente une paroi d'appui du dos d'un utilisateur, sensiblement plane s'étendant dans un plan, configuré pour recevoir en appui, par l'intermédiaire d'un coussin de dossier le dos d'un utilisateur, l'axe de symétrie de la portion sensiblement rectangulaire du premier logement s'étendant sensiblement parallèlement au plan du dossier ;
- la première paroi du premier dossier s'étend en saillie depuis la paroi d'appui du premier dossier, selon une direction sensiblement perpendiculaire au plan de ladite paroi d'appui, la première paroi présente une première partie s'étendant à proximité du premier logement entre l'axe de symétrie de la portion sensiblement rectangulaire du premier logement et le plan de la paroi d'appui du premier dossier, et définissant un angle compris entre 30° et 60°, de préférence entre 40° et 50° par rapport à l'axe de symétrie de la portion sensiblement rectangulaire du premier logement, depuis la portion circulaire vers la portion sensiblement rectangulaire selon le sens horaire, et la première paroi présente une deuxième partie s'étendant à proximité de la portion circulaire du premier logement, et définissant un angle compris entre -20° et +20°, de préférence entre -10° et +10° par rapport à l'axe de symétrie de la portion sensiblement rectangulaire du premier logement, depuis la portion circulaire vers la portion sensiblement rectangulaire selon le sens horaire, la première partie de la première paroi présentant une résistance au cisaillement selon la direction de l'axe de l'axe de pivotement supérieure à celle de la deuxième partie ;
- la première partie présente une résistance au cisaillement selon la direction de l'axe de l'axe de pivotement comprise entre 500 MPa et 900 MPa, de préférence entre 600 MPa et 800 MPa ;
- la nervure est prévue pour se trouver en vis-à-vis de la première partie de la première paroi du premier dossier, selon la direction transversale du siège, lorsque le dossier est orienté sensiblement selon la direction verticale du siège ;
- le premier dossier présente une première largeur selon la direction transversale du siège et le deuxième dossier présente une deuxième largeur selon la direction transversale du siège, la première largeur du premier dossier étant strictement inférieure à la deuxième largeur du deuxième dossier, de préférence de telle sorte que la largeur du premier dossier soit sensiblement égale à 2/3 de la largeur du deuxième dossier ;
- la nervure est dite première nervure, la première portion latérale présentant une deuxième nervure en saillie selon une direction radiale de l'axe de pivotement et s'étendant à l'opposé de l'axe de l'axe de pivotement, de section radiale sensiblement identique à la section radiale de la première nervure et positionnée en vis-à-vis et dans le prolongement de ladite première nervure selon la direction de l'axe de l'axe de pivotement, la première nervure et la deuxième nervure étant écartées d'une distance, selon la direction de l'axe de l'axe de pivotement, sensiblement égale à l'épaisseur de la première paroi du premier dossier, au jeu de pivotement près.

L'invention concerne également un procédé de fabrication d'un siège selon l'invention, comprenant :
a fixation de l'axe de pivotement au châssis du siège de sorte que la nervure soit orientée, du bas vers le haut selon le sens horaire, avec un angle compris entre 30° et 60°, de préférence entre 35° et 55° par rapport à la direction verticale du siège autour de l'axe de l'axe de pivotement,
le coulissement du premier dossier par rapport à l'axe de pivotement selon l'axe de l'axe de pivotement avec le dossier se trouvant dans ladite première position par rapport à l'axe de pivotement autour de l'axe de l'axe de pivotement, de sorte que la première portion latérale et la nervure coulissent au travers du premier logement selon l'axe de l'axe de pivotement,
le pivotement du premier dossier autour de l'axe de l'axe de pivotement de sorte que le dossier se retrouve dans ladite au moins une deuxième position du premier dossier par rapport à l'axe de pivotement autour de l'axe de l'axe de pivotement,
de sorte que la nervure se trouve, au moins partiellement, en vis-à-vis de la première paroi du premier dossier à proximité du premier logement, selon la direction de l'axe de l'axe de pivotement.

L'invention concerne enfin un véhicule comprenant au moins siège selon l'invention.

Selon un mode de réalisation du véhicule, le premier dossier est positionné sensiblement au centre du véhicule selon la direction transversale du véhicule, et le deuxième dossier est positionné à proximité d'une extrémité latérale du véhicule, et notamment à proximité d'une porte latérale du véhicule.

Les caractéristiques exposées dans les paragraphes suivants peuvent, optionnellement, être mises en oeuvre. Elles peuvent être mises en oeuvre indépendamment les unes des autres ou en combinaison les unes avec les autres.

### Brève description des dessins

D'autres caractéristiques, détails et avantages de l'invention apparaîtront à la lecture de la description détaillée ci-après, et à l'analyse des dessins annexés, sur lesquels :
**Fig. 1**

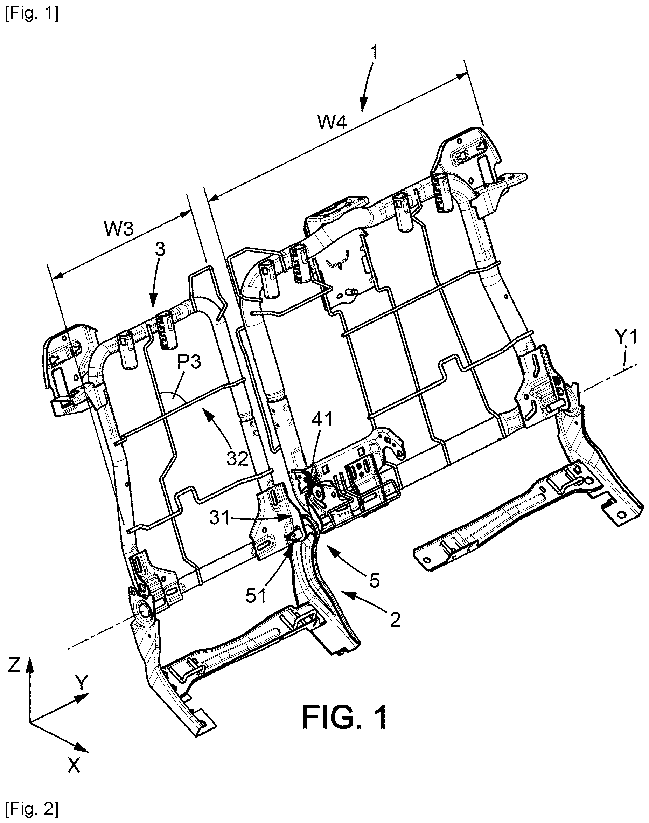

   [Fig. 1] montre une vue en perspective d'un siège de véhicule selon un mode de réalisation conforme à l'invention.
**Fig. 2**

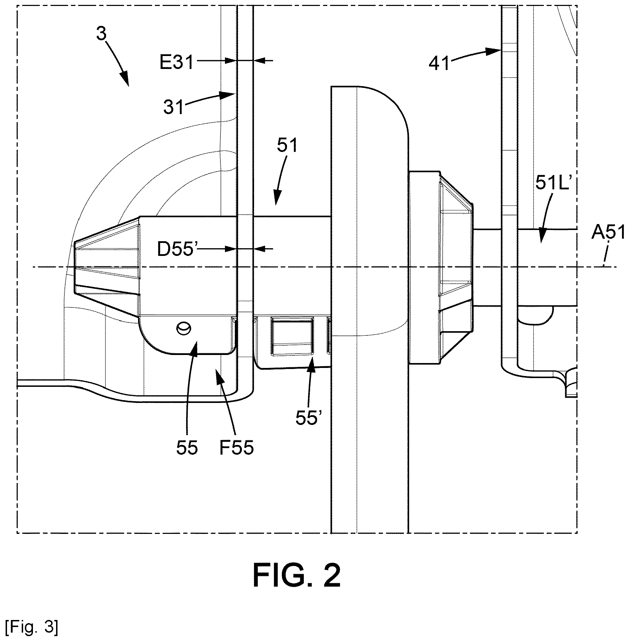

   [Fig. 2] montre une vue de détail de face de l'articulation commune du siège de la figure 1.
**Fig. 3**

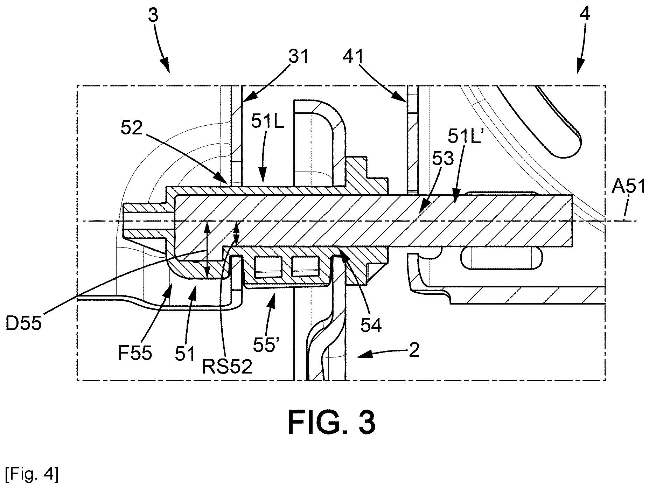

   [Fig. 3] montre une vue de détail en coupe selon la ligne III-III de la figure 1.
**Fig. 4**

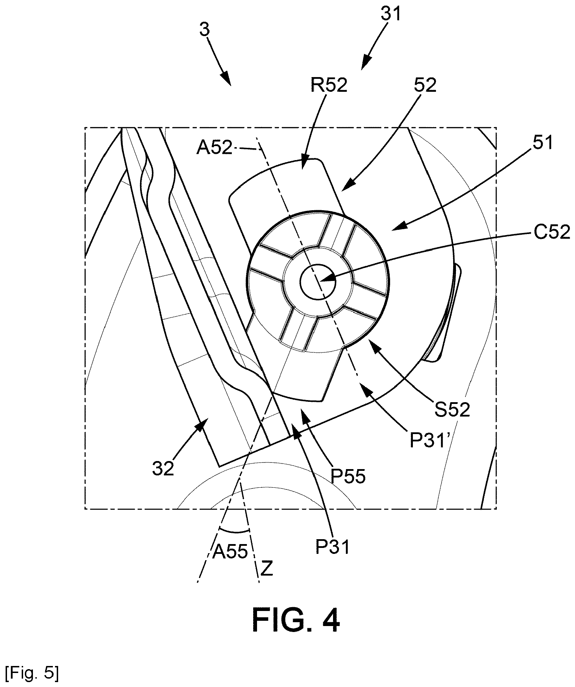

   [Fig. 4] montre une vue de gauche de détail de l'articulation commune du siège de la figure 1.
**Fig. 5**

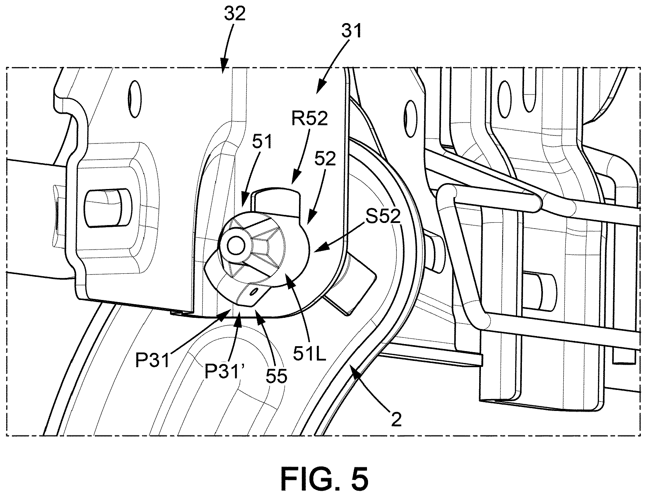

   [Fig. 5] montre une vue en perspective de détail de l'articulation commune du siège de la figure 1.

### Description des modes de réalisation

Dans l'ensemble de la présente demande, les directions de l'espace sont définies comme suit :
- la direction longitudinale X du siège correspond à la direction de coulissement du siège par rapport au plancher du véhicule le long de glissières, lorsque le siège comporte des glissières comme moyens de liaison au plancher du véhicule, reçues sur le châssis inférieur du siège, comme représenté sur les exemples de réalisation de la figure 1 ,
- la direction verticale Z du siège correspond à la direction perpendiculaire au plan du plancher du véhicule auquel est fixé le siège, perpendiculaire également à la direction longitudinale du siège définie ci-dessus, comme représenté sur les exemples de réalisation de la figure 1,
- la direction transversale Y du siège est la direction perpendiculaire à la direction longitudinale et à la direction verticale, comme représenté sur les exemples de réalisation de la figure 1.

Un axe est défini comme une droite selon une direction déterminée et, éventuellement avec un sens déterminé. Par exemple, un axe longitudinal est un axe selon ladite direction longitudinale.

Pour une pièce de révolution, une direction axiale est définie comme une direction parallèle à son axe de révolution et une direction radiale est une direction coupant l'axe de révolution et perpendiculaire à celui-ci.

Également avant et arrière s'entendent selon ladite direction longitudinale du siège, avec une orientation depuis le bord arrière du châssis d'assise, au niveau duquel est articulé un dossier de siège vers le bord avant du châssis d'assise.

De même, supérieur et inférieur s'entendent selon la direction verticale du siège, avec une orientation depuis les moyens de liaison au plancher du véhicule, et notamment les glissières vers le dossier du siège.

Enfin, dans l'ensemble de la présente demande, on entend par sensiblement longitudinal, transversal, vertical, axial ou radial, une orientation par rapport à la direction longitudinale, la direction transversale, la direction verticale, une direction axiale ou une direction radiale, avec un angle inférieur à 30°, qui peut avantageusement être nul.

De même, on entend par sensiblement parallèle, une orientation par rapport à un élément donné avec un angle inférieur à 30°, qui peut avantageusement être nul.

L'invention concerne, comme visible sur l'exemple de réalisation de la figure 1, un siège 1 de véhicule configuré de sorte à accueillir au moins deux utilisateurs, comprenant :
- un châssis d'assise 2, destiné à être relié au plancher d'un véhicule,
- un premier dossier 3 articulé pivotant au châssis d'assise 2 selon un axe transversal Y1 du siège 1,
- un deuxième dossier 4 articulé pivotant au châssis d'assise 2 selon l'axe transversal Y1 du siège 1.

Selon l'invention, le premier dossier 3 et le deuxième dossier 4 sont reliés au châssis d'assise 2 par l'intermédiaire d'une articulation commune 5, positionnée dans une zone intermédiaire ZI2 du châssis d'assise 2, selon la direction transversale Y du siège 1.

Selon l'invention, ladite articulation commune 5 comporte :
- un axe de pivotement 51 d'axe A51 confondu avec l'axe transversal Y1 du siège 1, comprenant une portion centrale 51C, une première portion latérale 51L et une deuxième portion latérale 51L', les deux portions latérales 51L, 51L' étant positionnées de part et d'autre de la portion centrale 51C selon l'axe A51 de l'axe de pivotement 51,
- un premier logement 52 ménagé sur une première paroi 31 du premier dossier 3 et recevant intérieurement la première portion latérale 51L de l'axe de pivotement 51, en autorisant la rotation du premier dossier 3 par rapport à l'axe de pivotement 51 autour de l'axe A51 dudit axe de pivotement 51,
- un deuxième logement 53 ménagé sur une deuxième paroi 41 du deuxième dossier 4 et recevant intérieurement la deuxième portion latérale 51L' de l'axe de pivotement 51, en autorisant la rotation du deuxième dossier 4 par rapport à l'axe de pivotement 51 autour de l'axe A51 dudit axe de pivotement 51,
- un troisième logement 54, ménagé sur le châssis d'assise 2, et recevant intérieurement la portion centrale 51C de l'axe de pivotement 51, la portion centrale 51C étant maintenue immobile dans le troisième logement 54 et de sorte que l'axe de pivotement 51 soit maintenu immobile par rapport au châssis d'assise 2.

Selon l'invention, la première portion latérale 51L présente une nervure 55 en saillie selon une direction radiale de l'axe de pivotement 51 et s'étendant à l'opposé de l'axe A51 de l'axe de pivotement 51.

Selon l'invention, le premier logement 52 présente une forme sensiblement de trou de serrure, complémentaire de la section radiale de la première portion latérale 51L de l'axe de pivotement 51 et de la nervure 55, avec une portion circulaire S52 de centre C52 et une portion sensiblement rectangulaire R52 communicantes entre elles, la portion sensiblement rectangulaire R52 étant positionnée au-dessus de la portion circulaire S52 du premier logement 52, selon la direction verticale Z du siège 1, lorsque le premier dossier 3 se trouve dans une position relevée, orienté sensiblement selon la direction verticale Z du siège 1.

Selon l'invention, ledit premier logement 52 et ladite première portion latérale 51L de l'axe de pivotement 51 sont configurés de telle sorte que :
- dans une première position du premier dossier 3, par rapport à l'axe de pivotement 51 autour de l'axe A51 de l'axe de pivotement 51, la première portion latérale 51L et la nervure 55 soient apte à coulisser au travers du premier logement 52 selon l'axe A51 de l'axe de pivotement 51, et
- dans au moins une deuxième position du premier dossier 3 par rapport à l'axe de pivotement 51 autour de l'axe A51 de l'axe de pivotement 51, le coulissement de la première portion latérale 51L et la nervure 55 au travers du premier logement 52 selon l'axe A51 de l'axe de pivotement 51, soit empêché, la nervure 55 se trouvant, au moins partiellement, en vis-à-vis de la première paroi 31 à proximité du premier logement 52, selon la direction de l'axe A51 de l'axe de pivotement 51.

Comme visible sur les exemples de réalisation des figures 1 à 5, dans ladite au moins une deuxième position du premier dossier 3 par rapport à l'axe de pivotement 51, la nervure 55 peut être prévue pour se trouver en vis-à-vis du premier dossier 3 dans le prolongement en avant de celui-ci selon la direction longitudinale X du siège 1.

Selon l'invention, la nervure 55 est orientée, du bas vers le haut selon le sens horaire, selon un angle A55 compris entre 30° et 60°, de préférence entre 35° et 55° par rapport à la direction verticale Z du siège 1 autour de l'axe A51 de l'axe de pivotement 51.

Ainsi, lors de la fabrication du siège 1 selon l'invention, pour le montage du premier dossier 3 sur le châssis d'assise 2, le premier dossier 3 est positionné dans la première position par rapport à l'axe de pivotement 51, de sorte à pouvoir coulisser par rapport à l'axe de pivotement 51 le long de l'axe A51, et afin que la première portion latérale 51L de l'axe de pivotement 51 traverse le premier logement 52 de part et d'autre de la première paroi 31 du premier dossier 3.

Le premier dossier 3 peut ensuite être pivoté par rapport à l'axe de pivotement 51 autour de l'axe A51 de sorte à se trouver dans l'une desdites deuxièmes positions, la nervure 55 se trouvant en vis-à-vis, au moins partiellement de la première paroi 31 du premier dossier 3, et de sorte à venir en butée contre la première paroi 31 du premier dossier 3, lors du coulissement du premier dossier 3 par rapport à l'axe de pivotement 51 le long de l'axe A51, empêchant ainsi la désolidarisation du premier dossier 3 de l'axe de pivotement 51.

La nervure 55 étant orientée, du bas vers le haut selon le sens horaire, selon un angle A55 compris entre 30° et 60°, de préférence entre 35° et 55° par rapport à la direction verticale Z du siège 1 autour de l'axe A51 de l'axe de pivotement 51, lorsque le premier dossier 3 se trouve orienté sensiblement selon ladite direction verticale Z du siège 1, comme visible sur l'exemple de réalisation de la figure 1, correspondant à une position usuelle d'utilisation du siège 1 avec un utilisateur ayant son dos en appui contre ledit premier dossier 3, la nervure 55 se trouve en vis-à-vis de la première paroi 31 du premier dossier 3, au niveau de la zone de jonction entre ladite première paroi 31 et la paroi d'appui 32 du dos d'un utilisateur du premier dossier 3, qui présente une résistance au cisaillement, selon la direction transversale Y du siège 1, plus élevée que la zone de la première paroi 31, en vis-à-vis de laquelle se trouverait la nervure 55, si elle était orientée, du bas vers le haut selon le sens horaire, avec un angle compris entre -20° et +20° par rapport à la direction verticale Z du siège 1 autour de l'axe A51 de l'axe de pivotement 51, laquelle est écartée de la zone de jonction entre la première paroi 31 et la paroi d'appui 32 du premier dossier 3, et comme dans les sièges de l'art antérieur.

Ainsi, lors d'un choc reçu par ledit siège 1 selon l'invention, et notamment par le premier dossier 3, lorsque ledit premier dossier 3 est orienté sensiblement selon la direction verticale Z du siège 1, par exemple en cas de projection d'un élément se trouvant à l'arrière du siège 1 contre ledit premier dossier 3, comme par exemple un bagage se trouvant dans le coffre du véhicule recevant ledit siège 1, ladite nervure 55 va venir buter contre ladite première paroi 31 du premier dossier 3 mais sans endommager celle-ci et risquer de déformer le premier logement 52.

Le premier dossier 3 ne risque donc pas de se désolidariser de l'axe de pivotement 51, et il n'y a pas de risque pour la sécurité d'un utilisateur reçu sur ledit premier dossier 3 du siège 1 selon l'invention.

Par ailleurs, une telle conception de la nervure 55 de l'axe de pivotement 51 modifie peu le déroulé de l'opération de montage du premier dossier 3 sur l'axe de pivotement 51 par rapport aux sièges de l'art antérieur, tels que décrits dans l'introduction de la présente demande, et celle-ci demeure simple à rapide à réaliser.

Avantageusement, le premier logement 52 et l'axe de pivotement 51 peuvent être configurés de sorte que ladite première position du premier dossier 3 par rapport à l'axe de pivotement 51 décrite ci-dessus ne corresponde pas à une position normale d'utilisation du premier dossier 3, c'est-à-dire une position du premier dossier 3 par rapport au châssis d'assise 2 autour de l'axe transversal Y1, dans laquelle un utilisateur ne peut pas positionner son dos en appui contre la paroi d'appui 32 du premier dossier 3. Ainsi, il n'y a pas de risque que la nervure 55 et la première portion latérale 51L de l'axe de pivotement 51 puissent passer au travers du premier logement 52, lorsque le premier dossier 3 se trouve dans une position d'utilisation, et donc que le premier dossier 3 se désolidarise du châssis d'assise 2, lorsqu'un utilisateur a son dos en appui contre ledit premier dossier 3. Ladite première position peut correspondre à une position de montage du premier dossier 3 sur l'axe de pivotement 51.

Également, le premier logement 52 et l'axe de pivotement 51 peuvent être configurés de sorte qu'il existe une pluralité de deuxièmes positions, correspondant chacune, au moins pour une partie d'entre elles, à une position normale d'utilisation du premier dossier 3, c'est-à-dire une position du premier dossier 3 par rapport au châssis d'assise 2 autour de l'axe transversal Y1, dans laquelle un utilisateur peut positionner son dos en appui contre la paroi d'appui 32 du premier dossier 3.

Selon un mode de réalisation, comme visible sur les exemples de réalisation des figures 4 et 5, la nervure 55 présente une section radiale sensiblement rectangulaire symétrique par rapport à un axe A55 passant par l'axe A51 de l'axe de pivotement 51 et la première portion latérale 51L présente une section radiale sensiblement circulaire centrée sur l'axe A51 de l'axe de pivotement A51.

Selon un tel mode de réalisation, la section radiale de la nervure 55 est de forme sensiblement identique à la portion sensiblement rectangulaire R52 du deuxième logement 52 et la section radiale de la première portion latérale 51L est de forme sensiblement identique à la portion circulaire S52 du premier logement 52.

Ainsi, dans ladite première position du premier dossier 3 par rapport à l'axe de pivotement 51 décrite ci-dessus, la nervure 55 se trouve en vis-à-vis de la portion sensiblement rectangulaire R52 du premier logement 52, selon la direction transversale Y du siège 1, et la première portion latérale 51L de l'axe de pivotement 51 se trouve en vis-à-vis de la portion circulaire S52 du premier logement 52, selon la direction transversale Y du siège 1.

De la même manière, dans la ou dans chacune desdites deuxièmes positions du premier dossier 3 par rapport à l'axe de pivotement, décrites ci-dessus, la nervure 55 se trouve décalée angulairement autour de l'axe A51 de l'axe de pivotement 51 de la portion sensiblement rectangulaire R52 du premier logement 52, selon la direction transversale Y du siège 1.

Selon un mode de réalisation, la nervure 55 présente une face d'extrémité radiale F55 positionnée à une distance D55 de l'axe A51 de l'axe de pivotement 51 strictement supérieure au rayon RS52 de la portion circulaire S52 du premier logement 52.

Ainsi, si le premier dossier 3 se trouve dans une position par rapport à l'axe de pivotement telle que la nervure 55 se trouve en vis-à-vis de la portion circulaire S52 du premier logement 52, selon la direction transversale Y du siège 1, correspondant à une deuxième position du premier dossier 3 par rapport à l'axe de pivotement 51, la nervure 55 ne peut pas passer au travers du premier logement 52 en coulissant le long de l'axe A51 de l'axe de pivotement 51.

Selon un mode de réalisation, le rayon RS52 de la portion circulaire S52 du premier logement 52 est sensiblement égal, au jeu de coulissement près, au rayon R51L de la section radiale de la première portion latérale 51L de l'axe de pivotement 51.

Grâce à cette disposition avantageuse de l'invention, et comme visible sur les exemples de réalisation des figures 4 et 5, la première portion latérale 51L de l'axe de pivotement 51 est maintenue dans la portion circulaire S52 du premier logement 52 en étant arrêtée en translation selon la direction longitudinale X et selon la direction verticale Z du siège 1, de sorte que, lors de l'utilisation du siège 1 selon l'invention, et notamment lorsque le véhicule auquel est fixé le siège 1 roule, la première portion latérale 51L de l'axe de pivotement 51 ne va pas venir buter contre la paroi intérieure de la portion circulaire S52 du premier logement 52 et générer du bruit ou venir l'endommager.

Selon un mode de réalisation, la portion sensiblement rectangulaire R52 du premier logement 52 présente un axe de symétrie A52 passant par le centre C52 de la portion circulaire S52.

Dans un tel mode de réalisation, le premier dossier 3 peut présenter une paroi d'appui 32 du dos d'un utilisateur, sensiblement plane s'étendant dans un plan P3, configuré pour recevoir en appui, par l'intermédiaire d'un coussin de dossier (non représenté) le dos d'un utilisateur.

Dans un tel mode de réalisation, l'axe de symétrie A52 de la portion sensiblement rectangulaire R52 du premier logement 52 peut s'étendre sensiblement parallèlement au plan P3 du dossier 3.

Ainsi, comme visible sur les exemples de réalisation des figures 4 et 5, le premier logement 52 est positionné de telle sorte que la première position du premier dossier 3 par rapport à l'axe de pivotement 51, telle que décrite ci-dessus, correspond à une position du premier dossier 3 par rapport au châssis d'assise 2 autour du premier axe transversal Y1 incliné vers l'arrière et le bas du châssis d'assise 2, d'une valeur comprise entre 0° et 30° par rapport à la direction longitudinale X du siège 1, dans le sens anti-horaire.

Cela permet que, comme expliqué ci-dessus, ladite première position du premier dossier 3 par rapport à l'axe de pivotement 51 ne corresponde pas à une position normale d'utilisation du premier dossier 3, dans laquelle un utilisateur peut positionner son dos en appui dessus.

Selon un mode de réalisation, la première paroi 31 du premier dossier 3 s'étend en saillie depuis la paroi d'appui 32 du premier dossier 3, selon une direction sensiblement perpendiculaire au plan P3 de ladite paroi d'appui 32.

Dans un tel mode de réalisation, et comme visible plus particulièrement sur l'exemple de réalisation des figures 4 et 5, la première paroi 31 peut présenter une première partie P31 s'étendant à proximité du premier logement 52 entre l'axe de symétrie A52 de la portion sensiblement rectangulaire R52 du premier logement 52 et le plan P3 de la paroi d'appui 32 du premier dossier 3, et définissant un angle compris entre 30° et 60°, de préférence entre 40° et 50° par rapport à l'axe de symétrie A52 de la portion sensiblement rectangulaire R52 du premier logement 52, depuis la portion circulaire S52 vers la portion sensiblement rectangulaire R2 selon le sens horaire.

Dans un tel mode d réalisation, la première paroi 31 peut présenter une deuxième partie P31' s'étendant à proximité de la portion circulaire S52 du premier logement 52, et définissant un angle compris entre -20° et +20°, de préférence entre -10° et +10° par rapport à l'axe de symétrie A52 de la portion sensiblement rectangulaire R52 du premier logement 52, depuis la portion circulaire S52 vers la portion sensiblement rectangulaire R52 selon le sens horaire.

Selon un tel mode de réalisation la première partie P31 de la première paroi 31 peut présenter une résistance au cisaillement selon la direction de l'axe A51 de l'axe de pivotement 51 supérieure à celle de la deuxième partie P31', notamment comprise entre 500 MPa et 900 MPa, de préférence entre 600 MPa et 800 MPa.

Ainsi, lorsque le premier dossier 3 se trouve dans la ou dans au moins une partie des deuxièmes positions du premier dossier 3 par rapport à l'axe de pivotement A51, telles que décrites ci-dessus, et notamment les deuxièmes positions correspondant à des positions d'utilisation du premier dossier 3, ladite nervure 55 se trouve en vis-à-vis de ladite première partie P31 de la première paroi 31 du premier dossier 3 et décalée de ladite deuxième partie P31'. De ce fait, si le premier dossier 3 coulisse par rapport à l'axe de pivotement 51 le long de l'axe A51, celle-ci va venir heurter ladite première partie P31, présentant une résistance au cisaillement selon la direction de l'axe A51 de l'axe de pivotement 51 supérieure à celle de la deuxième partie P31' sans risquer de la détériorer.

En effet, la deuxième partie P31' de la première paroi 31 présente une résistance au cisaillement selon la direction de l'axe A51 de l'axe de pivotement 51 inférieure à 500 MPa, généralement aux alentours de 400 MPa.

Au contraire dans les sièges de l'art antérieur, la nervure se trouve en vis-à-vis de ladite deuxième partie de la première paroi du premier dossier et décalée de ladite première partie. Cette deuxième partie présentant une résistance au cisaillement selon la direction de l'axe de l'axe de pivotement inférieure à celle de la première partie, elle risque de se détériorer en cas de choc avec la nervure.

Ainsi, la nervure 55 peut être prévue pour se trouver en vis-à-vis de la première partie P31 de la première paroi 31 du premier dossier 3, selon la direction transversale Y du siège 1, lorsque le dossier 3 est orienté sensiblement selon la direction verticale Z du siège 1, correspondant notamment à une position d'utilisation dudit premier dossier 3.

Selon un mode de réalisation, le premier dossier 3 présente une première largeur W3 selon la direction transversale Y du siège 1 et le deuxième dossier 4 présente une deuxième largeur W4 selon la direction transversale Y du siège 1, la première largeur W3 du premier dossier 3 étant strictement inférieure à la deuxième largeur W4 du deuxième dossier 4, de préférence de telle sorte que la largeur W3 du premier dossier 3 soit sensiblement égale à 2/3 de la largeur W4 du deuxième dossier 4.

En effet, le siège 1 selon l'invention est particulièrement adapté pour appartenir à une banquette, généralement prévue pour recevoir trois utilisateurs assis côte à côte, et généralement positionnée en deuxième, voire en troisième rangée de sièges d'un véhicule, la première rangée de sièges correspondant à celle comprenant le siège du conducteur du véhicule. Le premier dossier 3 est généralement prévu pour se trouver au centre de la banquette, selon la direction transversale Y du siège 1, et donc de la banquette, entre le deuxième dossier 4 et le dossier d'un autre siège (non représenté).

Le premier dossier 3 est généralement prévu pour être positionné au centre du véhicule recevant le siège 1 selon l'invention, selon la direction transversale du véhicule, correspondant généralement à la direction transversale Y du siège 1. Le deuxième dossier 4 peut quant à lui prévu pour être positionné à proximité d'une extrémité latérale du véhicule, selon la direction transversale du véhicule, et notamment à proximité d'une porte latérale du véhicule.

Selon un mode de réalisation, la nervure 55 est dite première nervure 55, la première portion latérale 51L présentant une deuxième nervure 55' en saillie selon une direction radiale de l'axe de pivotement 51 et s'étendant à l'opposé de l'axe A51 de l'axe de pivotement 51, de section radiale sensiblement identique à la section radiale de la première nervure 55 et positionnée en vis-à-vis et dans le prolongement de ladite première nervure 55 selon la direction de l'axe A51 de l'axe de pivotement 51, la première nervure 55 et la deuxième nervure 55' étant écartées d'une distance D55', selon la direction de l'axe A51 de l'axe de pivotement 51, sensiblement égale à l'épaisseur E31 de la première paroi 31 du premier dossier 3, au jeu de pivotement près.

Ainsi, grâce à la présence de ladite deuxième nervure 55' en complément de ladite première nervure 55, lorsque le premier dossier 3 se trouve dans la ou dans chacune desdites deuxièmes positions par rapport à l'axe de pivotement 51, telles que décrites ci-dessus, la translation de l'axe de pivotement 51 par rapport au premier dossier 3 le long de l'axe A51 de l'axe de pivotement 51 est empêché dans les deux sens de l'axe A51, afin d'assurer un maintien optimal du premier dossier 3 sur l'axe de pivotement 51.

L'ensemble des dispositions décrite précédemment concernant la première nervure 55 peuvent s'appliquer à la deuxième nervure 55'.

L'invention concerne également un procédé de fabrication d'un siège 1 selon l'une des modes de réalisation décrits ci-dessus, comprenant :
la fixation de l'axe de pivotement 51 au châssis 2 du siège 1 de sorte que la nervure 55 soit orientée, du bas vers le haut selon le sens horaire, avec un angle A55 compris entre 30° et 60°, de préférence entre 35° et 55° par rapport à la direction verticale Z du siège 1 autour de l'axe A51 de l'axe de pivotement 51,
le coulissement du premier dossier 3 par rapport à l'axe de pivotement 51 selon l'axe A51 de l'axe de pivotement 51 avec le dossier 3 se trouvant dans ladite première position par rapport à l'axe de pivotement 51 autour de l'axe A51 de l'axe de pivotement 51, de sorte que la première portion latérale 51L et la nervure 55 coulissent au travers du premier logement 52 selon l'axe A51 de l'axe de pivotement 51,
le pivotement du premier dossier 3 autour de l'axe A51 de l'axe de pivotement 51 de sorte que le dossier 3 se retrouve dans ladite au moins une deuxième position du premier dossier 3 par rapport à l'axe de pivotement 51 autour de l'axe A51 de l'axe de pivotement 51, de sorte que la nervure 55 se trouve, au moins partiellement, en vis-à-vis de la première paroi 31 du premier dossier 3 à proximité du premier logement 52, selon la direction de l'axe A51 de l'axe de pivotement 51.

L'ensemble des dispositions décrites précédemment concernant la fabrication du siège 1 selon l'invention, et le montage du premier dossier 3 sur le châssis d'assise 2, s'appliquent au procédé de fabrication d'un siège 1 selon l'invention.

Notamment, un tel procédé permet d'obtenir une fixation résistante du premier dossier 3 au châssis d'assise 2 du siège 1, comme expliqué ci-dessus.

Également, comme aussi expliqué ci-dessus, un tel procédé est simple et rapide à mettre en oeuvre, et pour un coût de revient réduit.

L'invention concerne enfin un véhicule comprenant un siège 1 de véhicule selon l'un des modes de réalisation décrits précédemment.

Le véhicule peut notamment être un véhicule automobile.

L'ensemble des dispositions décrites précédemment concernant un véhicule recevant le siège 1 selon l'invention s'appliquent au véhicule selon l'invention.

Notamment, et comme expliqué ci-dessus, le premier dossier 3 peut être positionné sensiblement au centre du véhicule selon la direction transversale du véhicule, et le deuxième dossier 4 peut être positionné à proximité d'une extrémité latérale du véhicule, et notamment à proximité d'une porte latérale du véhicule

Naturellement, d'autres modes de réalisation auraient pu être envisagés par l'Homme du métier sans pour autant sortir du cadre de l'invention définie par les revendications ci-après.

### Liste des signes de référence

1. Siège
2. Châssis d'assise
ZI2. Zone intermédiaire
3. Premier dossier
W3. Première largeur
P3. Plan
31. Première paroi
P31. Première partie
P31'. Deuxième partie
32. Paroi d'appui
4. Deuxième dossier
W4. Deuxième largeur
41. Deuxième paroi
5. Articulation commune
51. Axe de pivotement
A51. Axe
51C. Portion centrale
51L. Première portion latérale
R51L. Rayon
51L'. Deuxième portion latérale
52. Premier logement
S52. Portion circulaire
C52. Centre
RS52. Rayon
R52. Portion sensiblement rectangulaire
53. Deuxième logement
54. Troisième logement
55. Nervure
F55. Face d'extrémité radiale
D55, D55'. Distance
A55. Angle
55'. Nervure
X. Direction longitudinale
Y. Direction transversale
Z. Direction verticale
Y1. Axe transversal

## Revendications

1. Siège (1) de véhicule configuré de sorte à accueillir au moins deux utilisateurs, comprenant :
- un châssis d'assise (2), destiné à être relié au plancher d'un véhicule,
- un premier dossier (3) articulé pivotant au châssis d'assise (2) selon un axe transversal (Y1) du siège (1),
- un deuxième dossier (4) articulé pivotant au châssis d'assise (2) selon l'axe transversal (Y1) du siège (1), adjacent au premier dossier (3) dans lequel le premier dossier (3) et le deuxième dossier (4) sont reliés au châssis d'assise (2) par l'intermédiaire d'une articulation commune (5), positionnée dans une zone intermédiaire (ZI2) du châssis d'assise (2), selon la direction transversale (Y) du siège (1),
dans lequel ladite articulation commune (5) comporte :
- un axe de pivotement (51) d'axe (A51) confondu avec l'axe transversal (Y1) du siège (1), comprenant une portion centrale (51C), une première portion latérale (51L) et une deuxième portion latérale (51L'), les deux portions latérales (51L, 51L') étant positionnées de part et d'autre de la portion centrale (51C) selon l'axe (A51) de l'axe de pivotement (51),
- un premier logement (52) ménagé sur une première paroi (31) du premier dossier (3) et recevant intérieurement la première portion latérale (51L) de l'axe de pivotement (51), en autorisant la rotation du premier dossier (3) par rapport à l'axe de pivotement (51) autour de l'axe (A51) dudit axe de pivotement (51),
- un deuxième logement (53) ménagé sur une deuxième paroi (41) du deuxième dossier (4) et recevant intérieurement la deuxième portion latérale (51L') de l'axe de pivotement (51), en autorisant la rotation du deuxième dossier (4) par rapport à l'axe de pivotement (51) autour de l'axe (A51) dudit axe de pivotement (51),
- un troisième logement (54), ménagé sur le châssis d'assise (2), et recevant intérieurement la portion centrale (51C) de l'axe de pivotement (51), la portion centrale (51C) étant maintenue immobile dans le troisième logement (54) et de sorte que l'axe de pivotement (51) soit maintenu immobile par rapport au châssis d'assise (2),
**caractérisé en ce que** :
- la première portion latérale (51L) présente une nervure (55) en saillie selon une direction radiale de l'axe de pivotement (51) et s'étendant à l'opposé de l'axe (A51) de l'axe de pivotement (51),
- le premier logement (52) présente une forme sensiblement de trou de serrure, complémentaire de la section radiale de la première portion latérale (51L) de l'axe de pivotement (51) et de la nervure (55), avec une portion circulaire (S52) de centre (C52) et une portion sensiblement rectangulaire (R52) communicantes entre elles, la portion sensiblement rectangulaire (R52) étant positionnée au-dessus de la portion circulaire (S52) du premier logement (52), selon la direction verticale (Z) du siège (1), lorsque le premier dossier (3) se trouve dans une position relevée, orienté sensiblement selon la direction verticale (Z) du siège (1),
- ledit premier logement (52) et ladite première portion latérale (51L) de l'axe de pivotement (51) sont configurés de telle sorte que :
- dans une première position du premier dossier (3), par rapport à l'axe de pivotement (51) autour de l'axe (A51) de l'axe de pivotement (51), la première portion latérale (51L) et la nervure (55) soient apte à coulisser au travers du premier logement (52) selon l'axe (A51) de l'axe de pivotement (51), et
- dans au moins une deuxième position du premier dossier (3) par rapport à l'axe de pivotement (51) autour de l'axe (A51) de l'axe de pivotement (51), le coulissement de la première portion latérale (51L) et la nervure (55) au travers du premier logement (52) selon l'axe (A51) de l'axe de pivotement (51), soit empêché, la nervure (55) se trouvant, au moins partiellement, en vis-à-vis de la première paroi (31) à proximité du premier logement (52), selon la direction de l'axe (A51) de l'axe de pivotement (51), et
- la nervure (55) est orientée, du bas vers le haut selon le sens horaire, selon un angle (A55) compris entre 30° et 60°, de préférence entre 35° et 55° par rapport à la direction verticale (Z) du siège (1) autour de l'axe (A51) de l'axe de pivotement (51).

2. Siège (1) selon la revendication 1, dans lequel la nervure (55) présente une section radiale sensiblement rectangulaire symétrique par rapport à un axe (A55) passant par l'axe (A51) de l'axe de pivotement (51) et la première portion latérale (51L) présente une section radiale sensiblement circulaire centrée sur l'axe (A51) de l'axe de pivotement (A51),
et dans lequel la section radiale de la nervure (55) est de forme sensiblement identique à la portion sensiblement rectangulaire (R52) du deuxième logement (52) et la section radiale de la première portion latérale (51L) est de forme sensiblement identique à la portion circulaire (S52) du premier logement (52).

3. Siège (1) selon la revendication 2, dans lequel, la nervure (55) présente une face d'extrémité radiale (F55) positionnée à une distance (D55) de l'axe (A51) de l'axe de pivotement (51) strictement supérieure au rayon (RS52) de la portion circulaire (S52) du premier logement (52).

4. Siège (1) selon la revendication 2 ou 3 dans lequel le rayon (RS52) de la portion circulaire (S52) du premier logement (52) est sensiblement égal, au jeu de coulissement près, au rayon (R51L) de la section radiale de la première portion latérale (51L) de l'axe de pivotement (51).

5. Siège (1) selon l'une des revendications 1 à 4, , dans lequel la portion sensiblement rectangulaire (R52) du premier logement (52) présente un axe de symétrie (A52) passant par le centre (C52) de la portion circulaire (S52), dans lequel le premier dossier (3) présente une paroi d'appui (32) du dos d'un utilisateur, sensiblement plane s'étendant dans un plan (P3), configuré pour recevoir en appui, par l'intermédiaire d'un coussin de dossier le dos d'un utilisateur, et dans lequel l'axe de symétrie (A52) de la portion sensiblement rectangulaire (R52) du premier logement (52) s'étend sensiblement parallèlement au plan (P3) du dossier (3).

6. Siège (1) selon la revendication 5, dans lequel la première paroi (31) du premier dossier (3) s'étend en saillie depuis la paroi d'appui (32) du premier dossier (3), selon une direction sensiblement perpendiculaire au plan (P3) de ladite paroi d'appui (32),
dans lequel la première paroi (31) présente une première partie (P31) s'étendant à proximité du premier logement (52) entre l'axe de symétrie (A52) de la portion sensiblement rectangulaire (R52) du premier logement (52) et le plan (P3) de la paroi d'appui (32) du premier dossier (3), et définissant un angle compris entre 30° et 60°, de préférence entre 40° et 50° par rapport à l'axe de symétrie (A52) de la portion sensiblement rectangulaire (R52) du premier logement (52), depuis la portion circulaire (S52) vers la portion sensiblement rectangulaire (R2) selon le sens horaire,
et dans lequel la première paroi (31) présente une deuxième partie (P31') s'étendant à proximité de la portion circulaire (S52) du premier logement (52), et définissant un angle compris entre -20° et +20°, de préférence entre -10° et +10° par rapport à l'axe de symétrie (A52) de la portion sensiblement rectangulaire (R52) du premier logement (52), depuis la portion circulaire (S52) vers la portion sensiblement rectangulaire (R52) selon le sens horaire,
et dans lequel la première partie (P31) de la première paroi (31) présente une résistance au cisaillement selon la direction de l'axe (A51) de l'axe de pivotement (51) supérieure à celle de la deuxième partie (P31').

7. Siège (1) selon la revendication 6, dans lequel la première partie (P31) présente une résistance au cisaillement selon la direction de l'axe (A51) de l'axe de pivotement (51) comprise entre 500 MPa et 900 MPa, de préférence entre 600 MPa et 800 MPa.

8. Siège (1) selon la revendication 6 ou 7, dans lequel la nervure (55) est prévue pour se trouver en vis-à-vis de la première partie (P31) de la première paroi (31) du premier dossier (3), selon la direction transversale (Y) du siège (1), lorsque le dossier (3) est orienté sensiblement selon la direction verticale (Z) du siège (1).

9. Siège (1) selon l'une des revendications 1 à 8, dans lequel le premier dossier (3) présente une première largeur (W3) selon la direction transversale (Y) du siège (1) et le deuxième dossier (4) présente une deuxième largeur (W4) selon la direction transversale (Y) du siège (1), la première largeur (W3) du premier dossier (3) étant strictement inférieure à la deuxième largeur (W4) du deuxième dossier (4), de préférence de telle sorte que la largeur (W3) du premier dossier (3) soit sensiblement égale à 2/3 de la largeur (W4) du deuxième dossier (4).

10. Siège (1) selon l'une des revendications 1 à 9, dans lequel la nervure (55) est dite première nervure (55), la première portion latérale (51L) présentant une deuxième nervure (55') en saillie selon une direction radiale de l'axe de pivotement (51) et s'étendant à l'opposé de l'axe (A51) de l'axe de pivotement (51), de section radiale sensiblement identique à la section radiale de la première nervure (55) et positionnée en vis-à-vis et dans le prolongement de ladite première nervure (55) selon la direction de l'axe (A51) de l'axe de pivotement (51), la première nervure (55) et la deuxième nervure (55') étant écartées d'une distance (D55'), selon la direction de l'axe (A51) de l'axe de pivotement (51), sensiblement égale à l'épaisseur (E31) de la première paroi (31) du premier dossier (3), au jeu de pivotement près.

11. Procédé de fabrication d'un siège (1) selon l'une des revendications 1 à 9, comprenant :
la fixation de l'axe de pivotement (51) au châssis (2) du siège (1) de sorte que la nervure (55) soit orientée, du bas vers le haut selon le sens horaire, avec un angle (A55) compris entre 30° et 60°, de préférence entre 35° et 55° par rapport à la direction verticale (Z) du siège (1) autour de l'axe (A51) de l'axe de pivotement (51),
le coulissement du premier dossier (3) par rapport à l'axe de pivotement (51) selon l'axe (A51) de l'axe de pivotement (51) avec le dossier (3) se trouvant dans ladite première position par rapport à l'axe de pivotement (51) autour de l'axe (A51) de l'axe de pivotement (51), de sorte que la première portion latérale (51L) et la nervure (55) coulissent au travers du premier logement (52) selon l'axe (A51) de l'axe de pivotement (51),
le pivotement du premier dossier (3) autour de l'axe (A51) de l'axe de pivotement (51) de sorte que le dossier (3) se retrouve dans ladite au moins une deuxième position du premier dossier (3) par rapport à l'axe de pivotement (51) autour de l'axe (A51) de l'axe de pivotement (51), de sorte que la nervure (55) se trouve, au moins partiellement, en vis-à-vis de la première paroi (31) du premier dossier (3) à proximité du premier logement (52) , selon la direction de l'axe (A51) de l'axe de pivotement (51).

12. Véhicule comprenant au moins un siège (1) de véhicule selon l'une des revendications 1 à 10.

13. Véhicule selon la revendication 12, dans lequel le premier dossier (3) est positionné sensiblement au centre du véhicule selon la direction transversale du véhicule, et le deuxième dossier (4) est positionné à proximité d'une extrémité latérale du véhicule, et notamment à proximité d'une porte latérale du véhicule.

## Patentansprüche

1. Fahrzeugsitz (1), der konfiguriert ist, um mindestens zwei Benutzer aufzunehmen, umfassend:
- einen Sitzflächenrahmen (2), der mit dem Boden eines Fahrzeugs zu verbinden ist,
- eine erste Rückenlehne (3), die schwenkbar an dem Sitzflächenrahmen (2) entlang einer Querachse (Y1) des Sitzes (1) angelenkt ist,
- eine zweite Rückenlehne (4), die schwenkbar an dem Sitzflächenrahmen (2) entlang der Querachse (Y1) des Sitzes (1) angelenkt ist, benachbart zu der ersten Rückenlehne (3)
wobei die erste Rückenlehne (3) und die zweite Rückenlehne (4) mit dem Sitzflächenrahmen (2) mittels eines gemeinsamen Gelenks (5) verbunden sind, das in einer Zwischenzone (ZI2) des Sitzflächenrahmens (2) entlang der Querrichtung (Y) des Sitzes (1) positioniert ist, wobei das gemeinsame Gelenk (5) umfasst:
- einen Drehzapfen (51) mit einer Achse (A51), die mit der Querachse (Y1) des Sitzes (1) zusammenfällt, umfassend einen Mittelabschnitt (51C), einen ersten Seitenabschnitt (51L) und einen zweiten Seitenabschnitt (51 L'), wobei die beiden Seitenabschnitte (51L, 51 L') auf beiden Seiten des Mittelabschnitts (51C) entlang der Achse (A51) des Drehzapfens (51) positioniert sind,
- eine erste Aufnahme (52), die an einer ersten Wand (31) der ersten Rückenlehne (3) ausgebildet ist und den ersten seitlichen Abschnitt (51L) des Drehzapfens (51) innen aufnimmt, wodurch eine Drehung der ersten Rückenlehne (3) relativ zu dem Drehzapfen (51) um die Achse (A51) des Drehzapfens (51) ermöglicht wird,
- eine zweite Aufnahme (53), die an einer zweiten Wand (41) der ersten Rückenlehne (4) ausgebildet ist und den zweiten seitlichen Abschnitt (51 L') des Drehzapfens (51) innen aufnimmt, wodurch eine Drehung der zweiten Rückenlehne (4) relativ zu dem Drehzapfen (51) um die Achse (A51) des Drehzapfens (51) ermöglicht wird,
- eine dritte Aufnahme (54), die auf dem Sitzflächenrahmen (2) vorgesehen ist und innen den Mittelabschnitt (51C) des Drehzapfens (51) aufnimmt, wobei der Mittelabschnitt (51C) unbeweglich in der dritten Aufnahme (54) gehalten wird, so dass der Drehzapfen (51) unbeweglich in Bezug auf den Sitzflächenrahmen (2) gehalten wird,
**dadurch gekennzeichnet, dass:**
- der erste Seitenabschnitt (51L) eine Rippe (55) aufweist, die in einer radialen Richtung von dem Drehzapfen (51) vorsteht und sich von der Achse (A51) des Drehzapfens (51) weg erstreckt,
- die erste Aufnahme (52) eine im Wesentlichen schlüssellochartige Form aufweist, die komplementär zu dem radialen Querschnitt des ersten seitlichen Abschnitts (51L) des Drehzapfens (51) und der Rippe (55) ist, wobei ein kreisförmiger Abschnitt (S52) mit Mittelpunkt (C52) und ein im Wesentlichen rechteckiger Abschnitt (R52) miteinander in Verbindung stehen, wobei der im Wesentlichen rechteckige Abschnitt (R52) in der vertikalen Richtung (Z) des Sitzes (1) über dem kreisförmigen Abschnitt (S52) der ersten Aufnahme (52) positioniert ist, wenn sich die erste Rückenlehne (3) in einer angehobenen Position befindet, die im Wesentlichen in der vertikalen Richtung (Z) des Sitzes (1) ausgerichtet ist,
- die erste Aufnahme (52) und der erste seitliche Abschnitt (51L) des Drehzapfens (51) so konfiguriert sind, dass:
- in einer ersten Position der ersten Rückenlehne (3) relativ zu dem Drehzapfen (51) um die Achse (A51) des Drehzapfens (51) der erste seitliche Abschnitt (51L) und die Rippe (55) entlang der Achse (A51) des Drehzapfens (51) durch die erste Aufnahme (52) gleiten können, und
- in mindestens einer zweiten Position der ersten Rückenlehne (3) relativ zu dem Drehzapfen (51) um die Achse (A51) des Drehzapfens (51) herum jegliches Gleiten des ersten seitlichen Abschnitts (51L) und der Rippe (55) durch die erste Aufnahme (52) entlang der Achse (A51) des Drehzapfens (51) verhindert wird, wobei die Rippe (55) in Richtung der Achse (A51) des Drehzapfens (51) zumindest teilweise der ersten Wand (31) in der Nähe der ersten Aufnahme (52) gegenüberliegt, und
- die Rippe (55) im Uhrzeigersinn von unten nach oben in einem Winkel (A55) zwischen 30° und 60°, vorzugsweise zwischen 35° und 55°, zur Vertikalrichtung (Z) des Sitzes (1) um die Achse (A51) des Drehzapfens (51) ausgerichtet ist.

2. Sitz (1) nach Anspruch 1, wobei die Rippe (55) einen im Wesentlichen rechteckigen radialen Querschnitt aufweist, der symmetrisch um eine Achse (A55) ist, die durch die Achse (A51) des Drehzapfens (51) verläuft, und der erste seitliche Abschnitt (51L) einen im Wesentlichen kreisförmigen radialen Querschnitt aufweist, der auf der Achse (A51) des Drehzapfens (A51) zentriert ist,
und wobei der radiale Querschnitt der Rippe (55) in seiner Form im Wesentlichen mit dem im Wesentlichen rechteckigen Abschnitt (R52) der zweiten Aufnahme (52) identisch ist und der radiale Querschnitt des ersten Seitenabschnitts (51L) in seiner Form im Wesentlichen mit dem kreisförmigen Abschnitt (S52) der ersten Aufnahme (52) identisch ist.

3. Sitz (1) nach Anspruch 2, wobei die Rippe (55) eine radiale Endfläche (F55) aufweist, die in einem Abstand (D55) von der Achse (A51) des Drehzapfens (51) angeordnet ist, der strikt größer ist als der Radius (RS52) des kreisförmigen Abschnitts (S52) der ersten Aufnahme (52).

4. Sitz (1) nach Anspruch 2 oder 3, wobei der Radius (RS52) des kreisförmigen Abschnitts (S52) der ersten Aufnahme (52) innerhalb des Gleitspiels im Wesentlichen gleich dem Radius (R51L) des radialen Abschnitts des ersten seitlichen Abschnitts (51L) des Drehzapfens (51) ist.

5. Sitz (1) nach einem der Ansprüche 1 bis 4, wobei der im Wesentlichen rechteckige Abschnitt (R52) der ersten Aufnahme (52) eine Symmetrieachse (A52) aufweist, die durch den Mittelpunkt (C52) des kreisförmigen Abschnitts (S52) verläuft, wobei die erste Rückenlehne (3) eine im Wesentlichen ebene Rückenstützwand (32) für den Benutzer aufweist, die sich in einer Ebene (P3) erstreckt und dazu konfiguriert ist, den Rücken eines Benutzers über ein Rückenlehnenpolster zu stützen, und wobei die Symmetrieachse (A52) des im Wesentlichen rechteckigen Abschnitts (R52) der ersten Aufnahme (52) im Wesentlichen parallel zur Ebene (P3) der Rückenlehne (3) verläuft.

6. Sitz (1) nach Anspruch 5, wobei sich die erste Wand (31) der ersten Rückenlehne (3) von der Stützwand (32) der ersten Rückenlehne (3) in einer Richtung erstreckt, die im Wesentlichen senkrecht zur Ebene (P3) der Stützwand (32) ist,
wobei die erste Wand (31) einen ersten Teil (P31) aufweist, der sich nahe an dem ersten Gehäuse (52) zwischen der Symmetrieachse (A52) des im Wesentlichen rechteckigen Abschnitts (R52) der ersten Aufnahme (52) und der Ebene (P3) der Stützwand (32) der ersten Rückenlehne (3) erstreckt und einen Winkel zwischen 30° und 60°, vorzugsweise zwischen 40° und 50°, relativ zu der Symmetrieachse (A52) des im Wesentlichen rechteckigen Abschnitts (R52) der ersten Aufnahme (52) von dem kreisförmigen Abschnitt (S52) zu dem im Wesentlichen rechteckigen Abschnitt (R2) im Uhrzeigersinn definiert,
und wobei die erste Wand (31) einen zweiten Teil (P3T) aufweist, der sich nahe an dem kreisförmigen Abschnitt (S52) der ersten Aufnahme (52) erstreckt und einen Winkel zwischen -20° und +20°, vorzugsweise zwischen -10° und +10°, relativ zu der Symmetrieachse (A52) des im Wesentlichen rechteckigen Abschnitts (R52) der ersten Aufnahme (52) von dem kreisförmigen Abschnitt (S52) zu dem im Wesentlichen rechteckigen Abschnitt (R52) im Uhrzeigersinn definiert,
und wobei der erste Teil (P31) der ersten Wand (31) eine größere Scherfestigkeit in Richtung der Achse (A51) des Drehzapfens (51) aufweist als der zweite Teil (P31').

7. Sitz (1) nach Anspruch 6, wobei der erste Teil (P31) eine Scherfestigkeit in Richtung der Achse (A51) des Drehzapfens (51) zwischen 500 MPa und 900 MPa, vorzugsweise zwischen 600 MPa und 800 MPa aufweist.

8. Sitz (1) nach Anspruch 6 oder 7, wobei die Rippe (55) dazu bestimmt ist, gegenüber dem ersten Teil (P31) der ersten Wand (31) der ersten Rückenlehne (3) in der Querrichtung (Y) des Sitzes (1) angeordnet zu sein, wenn die Rückenlehne (3) im Wesentlichen in der vertikalen Richtung (Z) des Sitzes (1) ausgerichtet ist.

9. Sitz (1) nach einem der Ansprüche 1 bis 8, wobei die erste Rückenlehne (3) eine erste Breite (W3) in Querrichtung (Y) des Sitzes (1) aufweist und die zweite Rückenlehne (4) eine zweite Breite (W4) in Querrichtung (Y) des Sitzes (1) aufweist, wobei die erste Breite (W3) der ersten Rückenlehne (3) strikt kleiner ist als die zweite Breite (W4) der zweiten Rückenlehne (4), vorzugsweise so, dass die Breite (W3) der ersten Rückenlehne (3) im Wesentlichen gleich 2/3 der Breite (W4) der zweiten Rückenlehne (4) ist.

10. Sitz (1) nach einem der Ansprüche 1 bis 9, wobei die Rippe (55) als erste Rippe (55) bezeichnet wird, wobei der erste seitliche Abschnitt (51L) eine zweite Rippe (55') aufweist, die in radialer Richtung von dem Drehzapfen (51) vorsteht und sich von der Achse (A51) des Drehzapfens (51) weg erstreckt, mit einem radialen Querschnitt, der im Wesentlichen identisch mit dem radialen Querschnitt der ersten Rippe (55) ist und gegenüber und in der Verlängerung der ersten Rippe (55) in Richtung der Achse (A51) des Drehzapfens (51) angeordnet ist, wobei die erste Rippe (55) und die zweite Rippe (55') in Richtung der Achse (A51) des Drehzapfens (51) um einen Abstand (D55') voneinander beabstandet sind, der im Wesentlichen gleich der Dicke (E31) der ersten Wand (31) der ersten Rückenlehne (3) ist, und zwar innerhalb des Drehspiels.

11. Verfahren zum Herstellen eines Sitzes (1) nach einem der Ansprüche 1 bis 9, umfassend:
Befestigen des Drehzapfens (51) an dem Rahmen (2) des Sitzes (1), so dass die Rippe (55) im Uhrzeigersinn von unten nach oben in einem Winkel (A55) zwischen 30° und 60°, vorzugsweise zwischen 35° und 55°, zur Vertikalrichtung (Z) des Sitzes (1) um die Achse (A51) des Drehzapfens (51) ausgerichtet ist,
Gleiten der ersten Rückenlehne (3) relativ zu dem Drehzapfen (51) entlang der Achse (A51) des Drehzapfens (51), wobei sich die Rückenlehne (3) in der ersten Position relativ zu dem Drehzapfen (51) um die Achse (A51) des Drehzapfens (51) befindet, so dass der erste seitliche Abschnitt (51L) und die Rippe (55) entlang der Achse (A51) des Drehzapfens (51) durch die erste Aufnahme (52) gleiten,
Schwenken der ersten Rückenlehne (3) um die Achse (A51) des Drehzapfens (51), so dass sich die Rückenlehne (3) in der mindestens einen zweiten Position der ersten Rückenlehne (3) relativ zu dem Drehzapfen (51) um die Achse (A51) des Drehzapfens (51) befindet, so dass die Rippe (55) mindestens teilweise der ersten Wand (31) der ersten Rückenlehne (3), nahe dem ersten Gehäuse (52), in Richtung der Achse (A51) des Drehzapfens (51), gegenüberliegt.

12. Fahrzeug umfassend mindestens einen Fahrzeugsitz (1) nach einem der Ansprüche 1 bis 10.

13. Fahrzeug nach Anspruch 12, wobei die erste Rückenlehne (3) im Wesentlichen in der Mitte des Fahrzeugs in Querrichtung des Fahrzeugs positioniert ist und die zweite Rückenlehne (4) in der Nähe eines seitlichen Endes des Fahrzeugs und insbesondere in der Nähe einer Seitentür des Fahrzeugs positioniert ist.

## Claims

1. A vehicle seat (1) configured to accommodate at least two users, comprising:
- a squab frame (2), to be connected to the floor of a vehicle,
- a first backrest (3) pivotably hinged to the squab frame (2) along a transverse axis (Y1) of the seat (1),
- a second backrest (4) pivotably hinged to the squab frame (2) along the transverse axis (Y1) of the seat (1), adjacent to the first backrest (3)
wherein the first backrest (3) and the second backrest (4) are connected to the squab frame (2) by means of a common joint (5), positioned in an intermediate zone (ZI2) of the squab frame (2), along the transverse direction (Y) of the seat (1), wherein said common joint (5) comprises:
- a pivot pin (51) with axis (A51) coincident with the transverse axis (Y1) of the seat (1), comprising a central portion (51C), a first lateral portion (51L) and a second lateral portion (51 L'), the two lateral portions (51L, 51 L') being positioned on either side of the central portion (51C) along the axis (A51) of the pivot pin (51),
- a first housing (52) formed on a first wall (31) of the first backrest (3) and internally receiving the first lateral portion (51L) of the pivot pin (51), allowing rotation of the first backrest (3) relative to the pivot pin (51) about the axis (A51) of said pivot pin (51),
- a second housing (53) formed on a second wall (41) of the first backrest (4) and internally receiving the second lateral portion (51 L') of the pivot pin (51), allowing rotation of the second backrest (4) relative to the pivot pin (51) about the axis (A51) of said pivot pin (51),
- a third housing (54), provided on the squab frame (2), and internally receiving the central portion (51C) of the pivot pin (51), the central portion (51C) being held immovable in the third housing (54) and so that the pivot pin (51) is held immovable relative to the squab frame (2),
**characterized in that:**
- the first side portion (51L) has a rib (55) projecting in a radial direction from the pivot pin (51) and extending away from the axis (A51) of the pivot pin (51),
- the first housing (52) has a substantially keyhole shape, complementary to the radial cross-section of the first lateral portion (51L) of the pivot pin (51) and of the rib (55), with a circular portion (S52) with center (C52) and a substantially rectangular portion (R52) communicating with each other, the substantially rectangular portion (R52) being positioned above the circular portion (S52) of the first housing (52), in the vertical direction (Z) of the seat (1), when the first backrest (3) is in a raised position, oriented substantially in the vertical direction (Z) of the seat (1),
- said first housing (52) and said first lateral portion (51L) of the pivot pin (51) are configured such that:
- in a first position of the first backrest (3), relative to the pivot pin (51) about the axis (A51) of the pivot pin (51), the first lateral portion (51L) and the rib (55) are able to slide through the first housing (52) along the axis (A51) of the pivot pin (51), and
- in at least one second position of the first backrest (3) relative to the pivot pin (51) about the axis (A51) of the pivot pin (51), any sliding of the first lateral portion (51L) and the rib (55) through the first housing (52) along the axis (A51) of the pivot pin (51) is prevented, the rib (55) being at least partially opposite the first wall (31) in the vicinity of the first housing (52), in the direction of the axis (A51) of the pivot pin (51), and
- the rib (55) is oriented clockwise from bottom to top at an angle (A55) of between 30° and 60°, preferably between 35° and 55°, to the vertical direction (Z) of the seat (1) about the axis (A51) of the pivot pin (51).

2. The seat (1) according to claim 1, wherein the rib (55) has a substantially rectangular radial cross-section symmetrical about an axis (A55) passing through the axis (A51) of the pivot pin (51) and the first lateral portion (51L) has a substantially circular radial cross-section centered on the axis (A51) of the pivot pin (A51),
and wherein the radial cross-section of the rib (55) is substantially identical in shape to the substantially rectangular portion (R52) of the second housing (52) and the radial cross-section of the first side portion (51L) is substantially identical in shape to the circular portion (S52) of the first housing (52).

3. The seat (1) according to claim 2, wherein the rib (55) has a radial end face (F55) positioned at a distance (D55) from the axis (A51) of the pivot pin (51) strictly greater than the radius (RS52) of the circular portion (S52) of the first housing (52).

4. The seat (1) according to claim 2 or 3 wherein the radius (RS52) of the circular portion (S52) of the first housing (52) is substantially equal, within the sliding clearance, to the radius (R51L) of the radial section of the first lateral portion (51L) of the pivot pin (51).

5. The seat (1) according to one of claims 1 to 4, wherein the substantially rectangular portion (R52) of the first housing (52) has an axis of symmetry (A52) passing through the center (C52) of the circular portion (S52), wherein the first backrest (3) has a substantially planar user back support wall (32) extending in a plane (P3), configured to receive in support, via a backrest cushion, the back of a user, and wherein the axis of symmetry (A52) of the substantially rectangular portion (R52) of the first housing (52) extends substantially parallel to the plane (P3) of the backrest (3).

6. The seat (1) according to claim 5, wherein the first wall (31) of the first backrest (3) extends from the support wall (32) of the first backrest (3) in a direction substantially perpendicular to the plane (P3) of said bearing wall (32),
wherein the first wall (31) has a first part (P31) extending close to the first housing (52) between the axis of symmetry (A52) of the substantially rectangular portion (R52) of the first housing (52) and the plane (P3) of the support wall (32) of the first backrest (3), and defining an angle of between 30° and 60°, preferably between 40° and 50°, relative to the axis of symmetry (A52) of the substantially rectangular portion (R52) of the first housing (52), from the circular portion (S52) towards the substantially rectangular portion (R2) in a clockwise direction,
and wherein the first wall (31) has a second part (P3T) extending close to the circular portion (S52) of the first housing (52), and defining an angle of between -20° and +20°, preferably between -10° and +10°, relative to the axis of symmetry (A52) of the substantially rectangular portion (R52) of the first housing (52), from the circular portion (S52) towards the substantially rectangular portion (R52) in a clockwise direction,
and wherein the first part (P31) of the first wall (31) has greater shear strength in the direction of the axis (A51) of the pivot pin (51) than the second part (P31').

7. The seat (1) according to claim 6, wherein the first part (P31) has a shear strength in the direction of the axis (A51) of the pivot pin (51) of between 500 MPa and 900 MPa, preferably between 600 MPa and 800 MPa.

8. The seat (1) according to claim 6 or 7, wherein the rib (55) is intended to be located opposite the first part (P31) of the first wall (31) of the first backrest (3), in the transverse direction (Y) of the seat (1), when the backrest (3) is oriented substantially in the vertical direction (Z) of the seat (1).

9. The seat (1) according to one of claims 1 to 8, wherein the first backrest (3) has a first width (W3) in the transverse direction (Y) of the seat (1) and the second backrest (4) has a second width (W4) in the transverse direction (Y) of the seat (1), the first width (W3) of the first backrest (3) being strictly less than the second width (W4) of the second backrest (4), preferably such that the width (W3) of the first backrest (3) is substantially equal to 2/3 of the width (W4) of the second backrest (4).

10. The seat (1) according to one of claims 1 to 9, wherein the rib (55) is referred to as a first rib (55), the first lateral portion (51L) having a second rib (55') projecting in a radial direction from the pivot pin (51) and extending away from the axis (A51) of the pivot pin (51), of radial cross-section substantially identical to the radial cross-section of the first rib (55) and positioned opposite and in the extension of said first rib (55) in the direction of the axis (A51) of the pivot pin (51), the first rib (55) and the second rib (55') being spaced apart by a distance (D55'), in the direction of the axis (A51) of the pivot pin (51), substantially equal to the thickness (E31) of the first wall (31) of the first backrest (3), to within the pivot clearance.

11. A method for manufacturing a seat (1) according to any of claims 1 to 9, comprising:
fastening the pivot pin (51) to the frame (2) of the seat (1) so that the rib (55) is oriented clockwise from bottom to top at an angle (A55) of between 30° and 60°, preferably between 35° and 55°, to the vertical direction (Z) of the seat (1) about the axis (A51) of the pivot pin (51),
sliding the first backrest (3) relative to the pivot pin (51) along the axis (A51) of the pivot pin (51) with the backrest (3) being in said first position relative to the pivot pin (51) about the axis (A51) of the pivot pin (51), so that the first lateral portion (51L) and the rib (55) slide through the first housing (52) along the axis (A51) of the pivot pin (51),
pivoting the first backrest (3) about the axis (A51) of the pivot pin (51) so that the backrest (3) is in said at least one second position of the first backrest (3) relative to the pivot pin (51) about the axis (A51) of the pivot pin (51), so that the rib (55) is at least partially opposite the first wall (31) of the first backrest (3), close to the first housing (52), in the direction of the axis (A51) of the pivot pin (51).

12. The vehicle comprising at least one vehicle seat (1) according to one of claims 1 to 10.

13. The vehicle according to claim 12, wherein the first backrest (3) is positioned substantially in the center of the vehicle in the transverse direction of the vehicle, and the second backrest (4) is positioned near a side end of the vehicle, and in particular near a side door of the vehicle.
